# EUROPÄISCHE PATENTSCHRIFT

(11) **EP 0 945 493 B1**
(45) Veröffentlichungstag und Bekanntmachung des Hinweises auf die Patenterteilung: **16.01.2002**
(21) Anmeldenummer: 99104880.2
(22) Anmeldetag: 11.03.1999
(51) Int. Cl.: C09B 67/22

(54) **Dispersionsazofarbstoffmischungen**
Mixtures of monoazo disperse dyes
Mélanges de colorants monoazoiques dispersés

(30) Priorität: 23.03.1998 DE 19812615; 09.04.1998 DE 19816056
(43) Veröffentlichungstag der Anmeldung: 29.09.1999
(73) Patentinhaber: DyStar Textilfarben GmbH & Co. Deutschland KG, 60318 Frankfurt am Main (DE)
(72) Erfinder: Hoppe, Manfred Dr., 51515 Kürten (DE); Himeno, Kiyoshi, Munakata-city, Fukuoka 811-3425 (JP); Sekioka, Ryouichi, Yahatahigashi, Kitakyusyu-city 805-0065 (JP)

(56) Entgegenhaltungen:
- EP-A- 0 240 902
- EP-A- 0 475 089
- DD-A- 229 422
- GB-A- 2 030 169

## Beschreibung

Die Erfindung betrifft Dispersionsazofarbstoffmischungen, Verfahren zu ihrer Herstellung sowie ihre Verwendung zum Färben und Bedrucken von hydrophoben synthetischen Materialien.

Aus der DD-A-229422 sind bereits Mischungen von Dispersionsfarbstoffen bekannt, die neben weiteren Farbstoffen einen Farbstoff, der unter die nachstehend genannte Formel (II) fällt, und einen Farbstoff, der der nachstehend genannten Formel(I) strukturell nahekommt, enthalten.

Aufgabe der vorliegenden Erfindung war es, marineblaue bis schwarze Dispersionsfarbstoffmischungen mit guten anwendungstechnischen Eigenschaften bereitzustellen.

Es wurde nun eine Farbstoffmischung gefunden, enthaltend wenigstens einen Farbstoff der Formel (I) 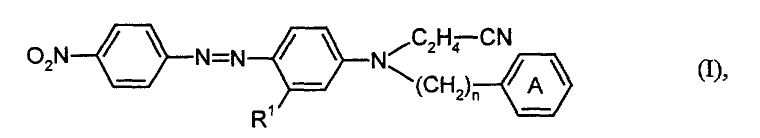 worin
- R¹: für Wasserstoff, C₁-C₄-Alkyl, Halogen, insbesondere Cl und Br oder C₁-C₄-Alkoxy steht,
- n: 1 oder 2 bedeutet und der
- Ring A: gegebenenfalls substituiert ist, wobei als mögliche Substituenten ein oder mehrere, gleiche oder verschiedene Substituenten, vorzugsweise C₁-C₄-Alkyl, insbesondere CH₃ sowie Halogen, insbesondere Cl und Br in Frage kommen,
und wenigstens einen Farbstoff der Formel (II) 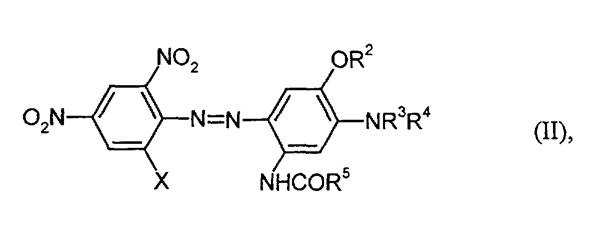 worin
- X: für Halogen, insbesondere Cl und Br oder CN steht,
- R² und R⁵: unabhängig voneinander Wasserstoff oder C₁-C₄-Alkyl bedeuten,
- R³ und R⁴: unabhängig voneinander Wasserstoff, gegebenenfalls substituiertes C₁-C₄-Alkyl oder C₂-C₄-Alkenyl bedeuten,
wobei als mögliche Substituenten für Alkyl -OH, -CN, -OCOR, -OCOC₆H₅, -OCOOR, -COOR, -OC₆H₅, -C₆H₅ und/oder C₁-C₄-Alkoxy bevorzugt sind, wobei R für Wasserstoff oder C₁-C₄-Alkyl steht.

Farbstoffe der Formel (I) sind beispielsweise aus CN-A-1 036 974 (=̂ CA 114 : 145 436) und Farbstoffe der Formel (II) beispielsweise aus DE-A-2 818 653 bekannt.

Bevorzugte Mischungen enthalten Verbindungen der Formel (I), worin der Ring A keine weiteren Substituenten trägt. Besonders bevorzugt sind Verbindungen der Formel (I), worin R¹ für Wasserstoff oder C₁-C₄-Alkyl, insbesondere Methyl steht. Ganz besonders bevorzugt sind erfindungsgemäße Mischungen, enthaltend den Farbstoff der Formel (I), worin n für 1 steht, R¹ Wasserstoff oder Methyl bedeutet und der Ring A nicht weiter substituiert ist.

Bevorzugte Mischungen enthalten als Farbstoff der Formel (II) einen solchen, worin X für Halogen, insbesondere Cl oder Br steht. Besonders bevorzugte Farbstoffe der Formel (II) sind solche,
worin
- R³ und R⁴: unabhängig voneinander Wasserstoff, C₂-C₄-Alkenyl, unsubstituiertes C₁-C₄-Alkyl oder durch -OCOR, -CN oder -COOR substituiertes C₁-C₄-Alkyl bedeutet, worin R die oben angegebene Bedeutung besitzt.

Insbesondere bedeuten in Formel (II) R² und R⁵ unabhängig voneinander C₁-C₄-Alkyl, vorzugsweise CH₃.

Besonders bevorzugte erfindungsgemäße Mischungen sind solche, enthaltend wenigstens einen Farbstoff der Formel (I), ausgewählt aus der Gruppe: 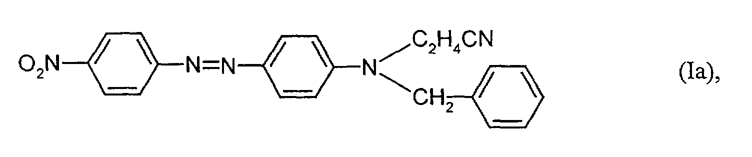 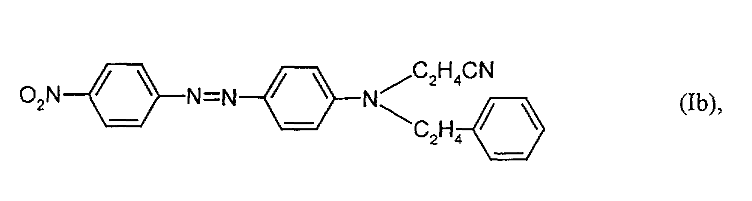 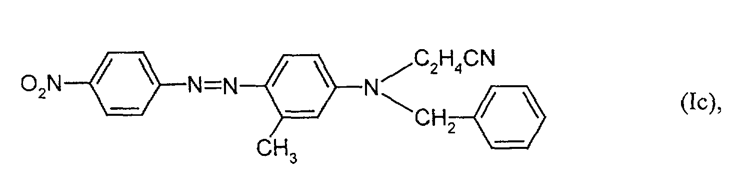 und wenigstens einen Farbstoff der Formel (II), ausgewählt aus der Gruppe:

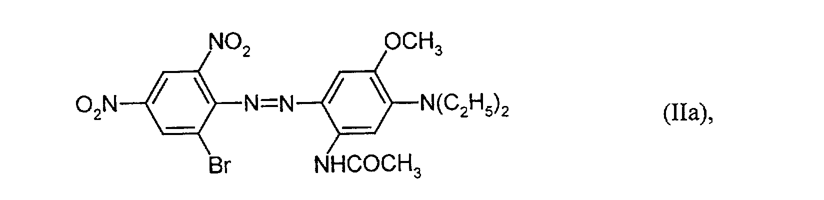

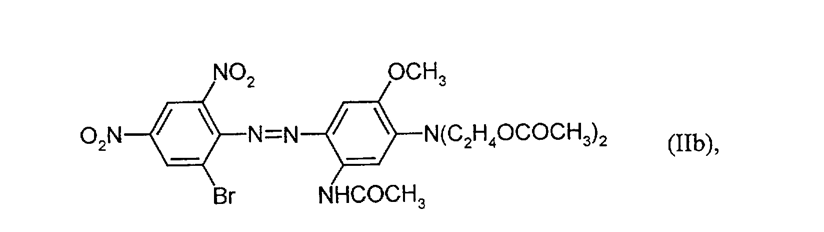

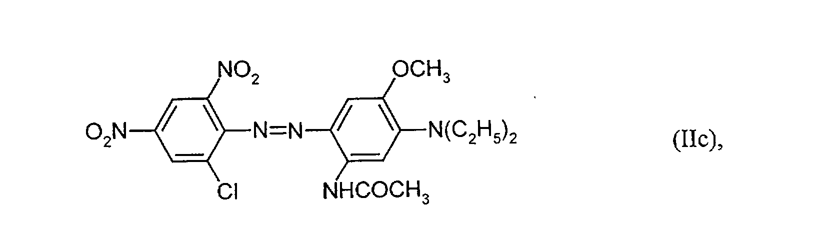

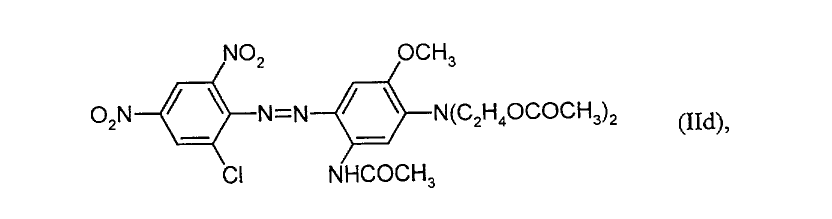

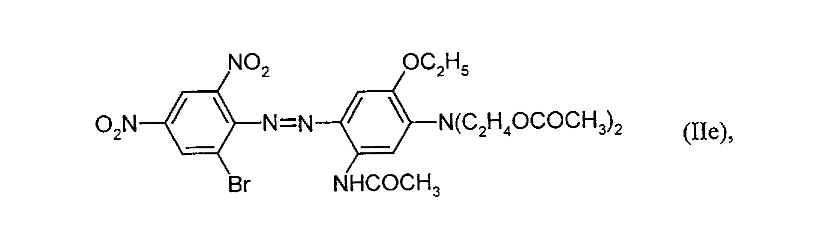

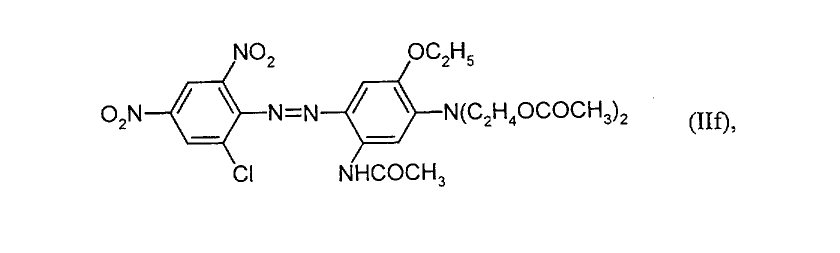

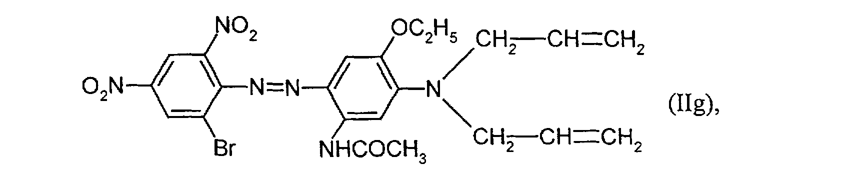

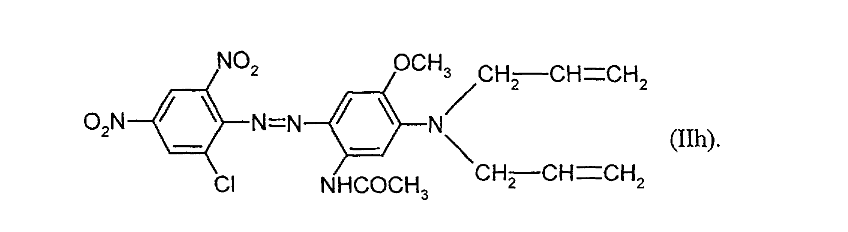

Bevorzugt sind weiterhin erfindungsgemäße Mischungen, die zusätzlich einen weiteren Farbstoff der Formel (III), (IV) und/oder (V) enthalten, 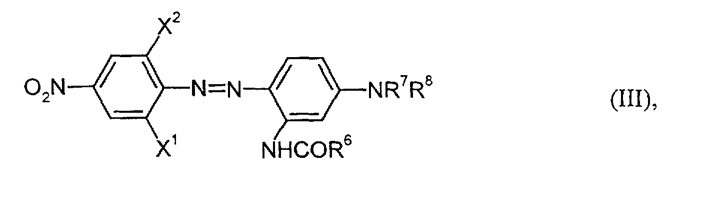 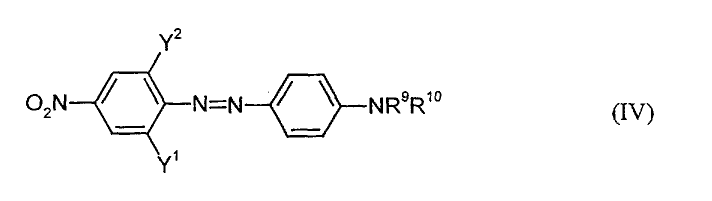 und/oder 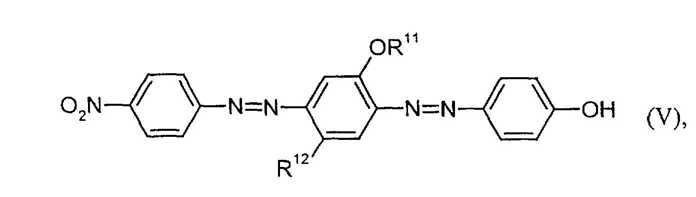 worin
- X¹: Halogen, insbesondere Cl und Br oder CN bedeutet,
- X²: Halogen, insbesondere Cl und Br, Wasserstoff, NO₂ oder CN,
- R⁶: C₁-C₄-Alkyl bedeutet,
- R⁷ und R⁸: unabhängig voneinander Wasserstoff, unsubstituiertes oder durch -OH, -CN, -OCOR, -OCOC₆H₅, -OCOO(C₁-C₄-Alkyl), -COOR, -OC₆H₅, -C₆H₅ und/oder C₁-C₄-Alkoxy substituiertes C₁-C₄-Alkyl oder C₂-C₄-Alkenyl bedeuten, wobei R die obengenannte Bedeutung hat,
- Y¹ und Y²: unabhängig voneinander Wasserstoff oder Halogen, insbesondere Cl und Br bedeuten,
- R⁹ und R¹⁰: unabhängig voneinander für Wasserstoff, unsubstituiertes oder durch -OH, -CN, -OCOR, -OCOC₆H₅ und/oder C₁-C₄-Alkoxy substituiertes C₁-C₄-Alkyl, wobei R die obengenannte Bedeutung hat, oder C₂-C₄-Alkenyl steht,
- R¹¹: C₁-C₄-Alkyl bedeutet und
- R¹²: Wasserstoff, C₁-C₄-Alkyl oder C₁-C₄-Alkoxy bedeutet.

Besonders bevorzugte Mischungen sind solche, die zusätzlich zu den Farbstoffen der Formeln (I) und (II) einen Farbstoff der Formel (III) enthalten. Insbesondere sind dabei zu nennen Farbstoffe der Formel (III) ausgewählt aus der Gruppe (IIIa) und (IIIb):

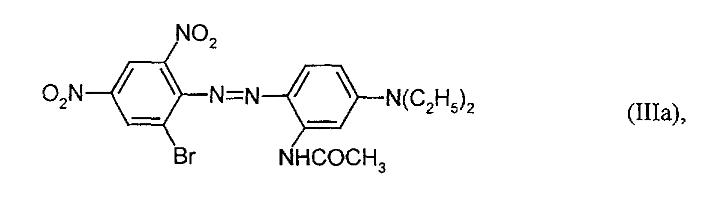

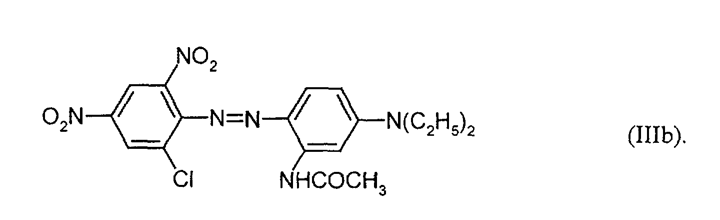

Ebenfalls besonders bevorzugte Mischungen sind solche, die zusätzlich zu den Farbstoffen der Formeln (I) und (II) einen Farbstoff der Formel (IV) enthalten. Insbesondere sind dabei zu nennen Farbstoffe der Formel (IV), ausgewählt aus der Gruppe (IVa), (IVb) und (IVc)

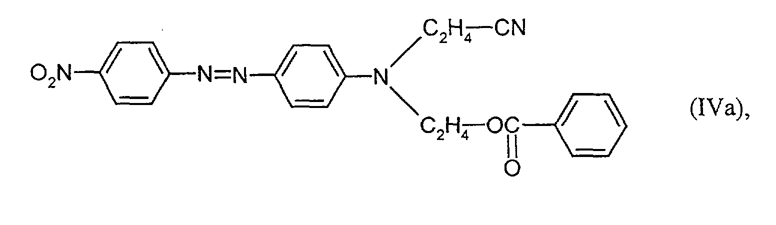

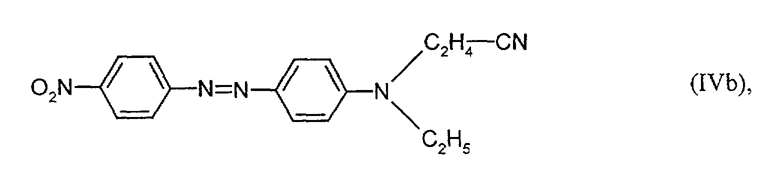

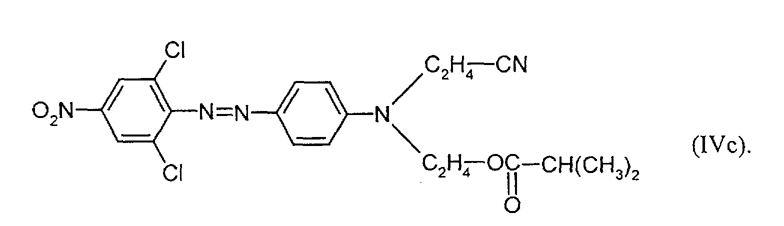

Weiterhin besonders bevorzugte Mischungen sind solche, die zusätzlich zu den Farbstoffen der Formeln (I) und (II) einen Farbstoff der Formel (V), insbesondere den Farbstoff der Formel (Va) 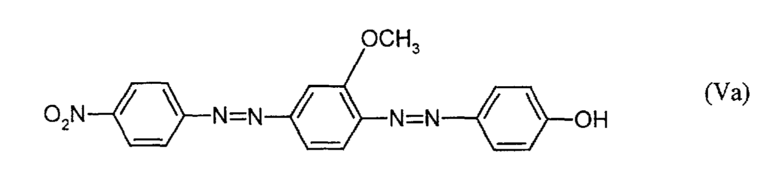 enthält.

Bevorzugt enthält die erfindungsgemäße Farbstoffmischung 1 bis 99, vorzugsweise 1 bis 80 Gew.-%, insbesondere 5 bis 60 Gew.-% wenigstens eines Farbstoffes der Formel (I) und 1 bis 99, vorzugsweise 20 bis 99 Gew.-%, insbesondere 40 bis 95 Gew.-% wenigstens eines Farbstoffes der Formel (II), bezogen auf die Farbstoffgesamtmenge.

Bevorzugt wird der Farbstoff der Formel (III) in einer Menge von 0 bis 80, insbesondere 2 bis 60 Gew.-%, bezogen auf die Farbstoffgesamtmenge, eingesetzt.

Bevorzugt wird der Farbstoff der Formel (IV) in einer Menge von 0 bis 40, insbesondere 5 bis 30 Gew.-%, bezogen auf die Farbstoffgesamtmenge, eingesetzt.

Bevorzugt wird der Farbstoff der Formel (V) in einer Menge von 0 bis 40, insbesondere 5 bis 30 Gew.-%, bezogen auf die Farbstoffgesamtmenge, eingesetzt.

Die erfindungsgemäßen Farbstoffmischungen führen insbesondere in den oben angegebenen Mengenangaben zu schwarzen bis marineblauen Tönen.

Die erfindungsgemäßen Mischungen zeichnen sich insbesondere durch eine ausgezeichnete Sublimierechtheit und gutes Aufziehvermögen aus. Außerdem ist die Farbausbeute in einem großen pH-Bereich gleichbleibend gut. Insbesondere eignen sie sich zum alkalischen Polyesterfärben, insbesondere bei einem pH von 8 bis 11.

Die erfindungsgemäße Farbstoffmischung kann auch weitere Dispersionsfarbstoffe enthalten.

Die Erfindung betrifft weiterhin ein Verfahren zur Herstellung der erfindungsgemäßen Mischung, dadurch gekennzeichnet, daß die Einzelfarbstoffe (I) und (II) und gegebenenfalls weitere Farbstoffe der Farbstoffmischung in Wasser in Gegenwart eines Dispergiermittels gemahlen, anschließend gemischt und gegebenenfalls getrocknet werden oder daß die Farbstoffe (I), (II) und gegebenenfalls weitere gemischt, in Wasser in Gegenwart eines Dispergiermittels gemahlen und gegebenenfalls getrocknet werden.

Erfindungsgemäße Farbstoffmischungen aus den Farbstoffen der Formeln (I), (II) sowie gegebenenfalls einem oder mehreren der Farbstoffe der allgemeinen Formeln (III) bis (V) lassen sich beispielsweise durch einfaches Mischen der Komponenten herstellen. Das Mischen kann dabei dadurch erfolgen, daß man separat gefinishte Einzelkomponenten in der Färbeflotte mischt, oder aber vorzugsweise, indem man die Preßkuchen der Einzelkomponenten mischt und gemeinsam finisht.

Das Finish ist dadurch gekennzeichnet, daß die Farbstoffe durch einen Aufmahlvorgang in Gegenwart eines Dispergiermittels in eine wäßrige Dispersion, d.h. in eine flüssige oder nach Trocknung in eine pulverförmige Farbstoffpräparation, überführt werden, wobei die Einzelfarbstoffe zuerst separat gefinisht werden können und dann gemischt werden oder die Einzelfarbstoffe erst gemischt und dann gemeinsam gefinisht werden können. Dieses Aufmahlen geschieht vorzugsweise in Mühlen, wie z.B. Kugel-, Schwing-, Perl- oder Sandmühlen oder in Knetern. Nach der Aufmahlung liegt die Größe der Farbstoffteilchen vorzugsweise bei ca. 0,1 bis 10 µm, insbesondere bei ca. 1 µm. Die Aufmahlung erfolgt vorzugsweise in Gegenwart von Dispergiermitteln, die nichtionogen oder anionaktiv sein können. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate bzw. deren Salze, Alkyl- oder Alkylarylsulfonate, Alkylarylpolyglykolethersulfate, Alkalisalze der Kondensationsprodukte aus Naphthalinsulfonsäuren und Formaldehyd, Polyvinylsulfonate und oxethylierte Novolake.

Die Erfindung betrifft daher auch Farbstoffpräparationen, enthaltend
10 bis 60 Gew.-% der erfindungsgemäßen Farbstoffmischung und
40 bis 90 Gew.-% Dispergiermittel.

Die Farbstoffpräparationen können in flüssiger oder fester Form vorliegen, wobei es sich bei den flüssigen Präparationen vorzugsweise um wäßrige Farbstoffdispersionen handelt und die festen Präparationen als Pulver oder Granulat vorliegen.

Bevorzugte wäßrige Farbstoffpräparationen enthalten Wasser,
15 bis 50 Gew.-% der erfindungsgemäßen Farbstoffmischung und
10 bis 25 Gew.-% Dispergiermittel, jeweils bezogen auf die Farbstoffpräparation.

Als bevorzugte Dispergiermittel sind die obengenannten nicht-ionogenen und anionischen Dispergiermittel zu nennen.

Die erfindungsgemäßen Farbstoffpräparationen können auch noch weitere Hilfsmittel enthalten, z.B. solche, die als Oxidationsmittel wirken, wie z.B. Natrium-m-nitrobenzolsulfonat oder fungizide Mittel, wie z.B. Natrium-o-phenylphenolat und Natriumpentachlorphenolat. Auch Netzmittel, Frostschutzmittel, Entstaubungsmittel oder Hydrophilierungsmittel können enthalten sein.

Für gewisse Anwendungsbereiche werden feste Präparationen wie Pulver- bzw. Granulateinstellungen bevorzugt. Bevorzugte feste Farbstoffpräparationen enthalten
30 bis 50 Gew.-% der erfindungsgemäßen Farbstoffmischung und
70 bis 50 Gew.-% Dispergiermittel.

Sie können weiterhin gegebenenfalls Hilfsmittel, wie z.B. Netz-, Oxidations-, Konservierungs- und Entstaubungsmittel enthalten.

Ein bevorzugtes Herstellungsverfahren für die festen Farbstoffpräparationen besteht darin, daß den oben beschriebenen flüssigen Farbstoffpräparationen die Flüssigkeit z.B. durch Vakuumtrocknung, Gefriertrocknung, durch Trocknung auf Walzentrocknern, vorzugsweise aber durch Sprühtrocknung entzogen wird.

Erfindungsgemäße Farbstoffmischungen lassen sich bevorzugt aber auch durch gemeinsames Finishing der Mischungskomponenten herstellen.

Dazu werden die Mischungskomponenten im geeigneten Mischungsverhältnis wie oben beschrieben durch einen Aufmahlvorgang in Wasser dispergiert und gegebenenfalls durch Entzug des Wassers in eine feste Farbstoffpräparation überführt.

Zur Verbesserung der Eigenschaften der Farbstoffpräparationen kann es dabei vorteilhaft sein, die Mischungskomponenten vor der Mahlung einer Wärmebehandlung zu unterziehen. Die Wärmebehandlung erfolgt bei 25 bis 98°C, vorzugsweise bei 30 bis 80°C und besonders bevorzugt bei 40 bis 60°C. Es ist dabei vorteilhaft, unmittelbar nach der Wärmebehandlung ohne Zwischenisolierung zu finishen, das heißt in die handelsüblichen Fest- oder Flüssigpräparationen zu überführen. Zu diesem Zweck wird die wärmebehandelte Suspension durch Mahlung in eine Dispersion überführt. Es ist dabei zweckmäßig, die Wärmebehandlung in Gegenwart derjenigen Dispergier- und gegebenenfalls auch Hilfsmittel durchzuführen, die in der gefinishten Fest- oder Flüssigpräparation enthalten sein sollen. Diese sind mit den obengenannten oberflächenaktiven Substanzen identisch. Wurde während der Wärmebehandlung nicht die Gesamtmenge dieser Dispergier- und Hilfsmittel zugesetzt, so wird vor der Mahlung die Restmenge zugegeben. Zur Wärmebehandlung werden in diesem Falle in der Regel 10 bis 400 Gew.-%, vorzugsweise 20 bis 200 Gew.-% oberflächenaktive Substanzen, bezogen auf die Farbstoffmischungen zugegeben.

Zur Herstellung der Färbeflotten werden die erforderlichen Mengen der Farbstoffpräparationen, die gemäß den obigen Angaben hergestellt wurden, mit dem Färbemedium, vorzugsweise mit Wasser, soweit verdünnt, daß sich für die Färbung ein Flottenverhältnis von 1:5 bis 1:50 ergibt. Zusätzlich werden den Flotten im allgemeinen weitere Färbereihilfsmittel, wie Carrier, Dispergier- und Netzmittel zugesetzt.

Soll die erfindungsgemäße Farbstoffmischung für den Textildruck herangezogen werden, so werden die erforderlichen Mengen der Farbstoffpräparation, vorzugsweise zusammen mit Verdickungsmitteln, wie z.B. Alkali-Alginaten oder dgl., und gegebenenfalls weiteren Zusätzen, wie z.B. Fixierbeschleunigem, Netzmitteln und Hydrationsmitteln zu Druckpasten verknetet.

Die erfindungsgemäßen Farbstoffmischungen, die im übrigen auch noch weitere Farbstoffe enthalten können, sind vorzüglich zum Färben und Bedrucken von hydrophoben synthetischen Materialien geeignet. Als hydrophobe synthetische Materialien kommen z.B. in Betracht: Cellulose-2½-acetat, Cellulosetriacetat, Polyamide und hochmolekulare Polyester. Vorzugsweise werden die erfindungsgemäßen Farbstoffmischungen zum Färben und Bedrucken von Materialien aus hochmolekularen Polyestern, insbesondere solchen auf Basis von Polyethylenglykolterephthalaten oder deren Mischungen mit natürlichen Faserstoffen, wie insbesondere Wolle oder Cellulose, oder von Materialien aus Cellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffmischungen kann in an sich bekannter Weise erfolgen, vorzugsweise aus wäßriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird. Das Bedrucken der genannten Materialien kann in an sich bekannter Weise so durchgefuhrt werden, daß die erfindungsgemäßen Farbstoffmischungen in eine Druckpaste einverleibt werden und die damit bedruckte Ware zur Fixierung der Farbstoffe, gegebenenfalls in Gegenwart eines Carriers, bei Temperaturen zwischen 180 bis 230°C mit HT-Dampf oder Trockenhitze behandelt wird. Man erhält auf diese Weise sehr farbstarke olivfarbene, marineblaue oder schwarze Färbungen und Drucke mit sehr guten Echtheiten, insbesondere mit sehr guten Licht-, Reib-, Thermofixier-,Wasch-, Wasser- und Sublimierechtheiten.

Die erfindungsgemäßen Farbstoffmischungen zeigen beim Ansetzen von Färbe- und Klotzflotten sowie auch von Druckteigen ein hervorragendes Benetzungsverhalten und lassen sich rasch und ohne aufwendiges manuelles oder maschinelles Rühren dispergieren. Die Flotten und Druckteige sind homogen und lassen sich in modernen Farbküchen problemlos verarbeiten, ohne die Düsen zu verstopfen.

Die erfindungsgemäßen Flüssigpräparationen neigen nicht zur Phasentrennung und insbesondere nicht zur Sedimentation und kittigem Absetzen. Ein ebenfalls aufwendiges Homogenisieren des Farbstoffs im Gebinde vor der Farbstoffentnahme kann somit entfallen.

Der bei der Herstellung der festen Präparationen nach der Mahlung der Farbstoffe in Gegenwart von Dispergier- und Hilfsmittel anfallende Mahlteig ist auch bei erhöhter Temperatur und über längere Zeit stabil. Der Mahlteig in den Mühlen wie auch nach Verlassen der Mühlen braucht nicht gekühlt zu werden und läßt sich vor der Sprühtrocknung längere Zeit in Sammelbehältern lagern.

Die thermische Stabilität der erfindungsgemäßen Farbstoffmischung äußert sich auch darin, daß die Sprühtrocknung bei hohen Temperaturen durchgeführt werden kann, ohne daß das zu trocknende Gut agglomeriert. Bei gleicher Trocknerausgangstemperatur bedeutet eine Erhöhung der Eingangstemperatur eine Erhöhung der Trocknerleistung und somit eine Erniedrigung der Fertigungskosten.

Die oben beschriebenen Farbstoffpräparationen können sehr vorteilhaft zum Ansetzen von Druckpasten und Färbeflotten verwendet werden. Besondere Vorteile bieten sie z.B. bei den Kontinue-Verfahren, bei denen durch kontinuierliche Farbstoffeinspeisung in die laufende Apparatur die Farbstoffkonzentration der Färbeflotten konstant gehalten werden muß.

Der Vorteil der erfindungsgemäßen Farbstoffmischungen wird besonders deutlich beim Färben aus wäßrigem Färbebad unter modernen Praxisbedingungen.

Die genannten modernen Praxisbedingungen sind gekennzeichnet durch hohe Wickeldichten bei Kreuzspul- und Baumfärbungen, kurze Flottenverhältnisse, also hohe Farbstoffkonzentrationen sowie hohe Scherkräfte in der Färbeflotte bedingt durch hohe Pumpenleistungen. Auch unter diesen Bedingungen neigen die erfindungsgemäßen Farbstoffmischungen nicht zur Agglomeration, und es kommt nicht zur Abfiltrationen auf den zu färbenden Textilmaterialien. Es werden also homogene Färbungen ohne Farbstärkeunterschiede zwischen den äußeren und den inneren Lagen der Wickelkörper erhalten, und die Färbungen zeigen keinen Abrieb. Bei Klotzfärbungen und Drucken mit der erfindungsgemäßen Farbstoffmischung wird ein homogenes, stippenfreies Warenbild erhalten.

Die erfindungsgemäßen Farbstoffmischungen eignen sich auch zum Färben der vorstehend aufgeführten hydrophoben Materialien aus organischen Lösungsmitteln nach den hierbei bekannten Methoden und zum Färben in der Masse.

Die Erfindung betrifft daher auch die Verwendung der erfindungsgemäßen Farbstoffmischungen zum Färben und Bedrucken von hydrophoben synthetischen Materialien, insbesondere Fasermaterialien sowie zum Färben von hydrophoben synthetischen Materialien in der Masse.

Die Erfindung wird durch die nachfolgenden Beispiele näher erläutert.

### Beispiele

### Beispiel 1

a) 13,3 g des Farbstoffes der Formel (1) 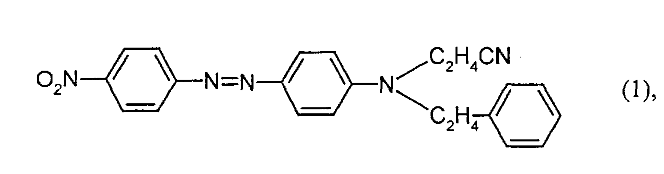 und
   11 g des Farbstoffes der Formel (2) 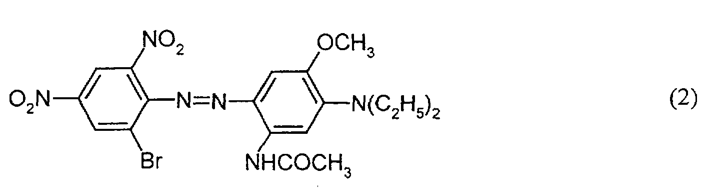 sowie
   13,7 g des Farbstoffes der Formel (3) 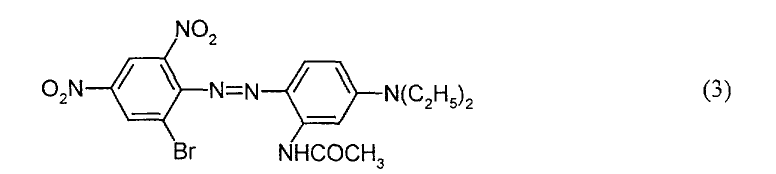 und
   6,0 g des Farbstoffes der Formel (4) 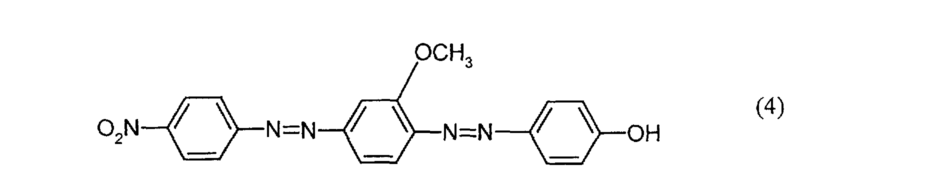 wurden zusammen mit 300 ml Wasser und 56 g eines Ligninsulfonates (Na-Salz) 3 Stunden in einer Perlmühle - oder Sandmühle - gemahlen und anschließend sprühgetrocknet (Eingangstemperatur 130°C, Austrittstemperatur 60°C). Das so erhaltene Pulver (ca. 100 g) läßt sich leicht in Wasser dispergieren.
b) 0,4 g des oben hergestellten Pulvers wurden zusammen mit 10 g Polyester Textilmaterial bei pH 4,5 und 130°C ca. 60 min nach einem normalen HT-Färbeverfahren behandelt. Nach dem Waschen, Spülen und Trocknen wird eine tiefschwarze Färbung mit sehr guten Echtheiten erhalten.

Analog Beispiel 1 wurden weitere Farbstoffmischungen hergestellt und zum Polyesterfärben eingesetzt, wobei 13,3 g des Farbstoffes 1 aus Beispiel 1 und 11 g des Farbstoffes der allgemeinen Formel (II) eingesetzt wurden, in der die Substituenten die in der Tabelle 1 angegebenen Bedeutungen haben.

**Tabelle 1**

| eingesetzter Farbstoff der Formel (II) | | | | | |
|---|---|---|---|---|---|
| **Bsp.** | **X** | **R**^{**2**} | **R**^{**5**} | **R**^{**3**} | **R**^{**4**} |
| 2 | Cl | C₂H₅ | C₂H₅ | CH₂CH₂CN | CH₂CH₂COOCH₃ |
| 3 | Br | CH₃ | CH₃ | CH₂CH₂-OCH₃ | CH₂CH₂-OCH₃ |
| 4 | Br | CH₃ | C₂H₅ | CH₂CH₂-OCOC₆H₅ | CH₂CH₂-OCOC₆H₅ |
| 5 | Br | CH₃ | CH₃ | CH₂CH₂-OCOCH₃ | CH₂CH₂-OCOCH₃ |
| 6 | Br | CH₃ | CH₃ | CH₂CH₂CN | CH₂- C₆H₅ |
| 7 | Cl | CH₃ | C₂H₅ | CH₂CH₂CN | H |
| 8 | Br | CH₃ | CH₃ | CH₂CH₂COOCH₃ | CH₂CH₂COOCH₃ |

### Beispiel 9

Analog Beispiel 1 wurden
5 g des Farbstoffes der Formel (6) 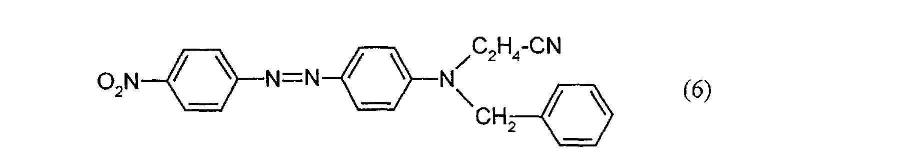 und
39 g des Farbstoffes der Formel (5) 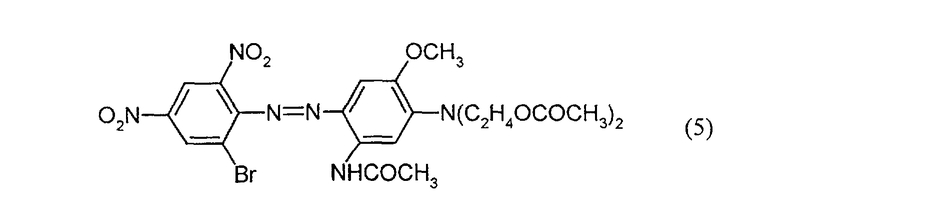
gemahlen und getrocknet. Das Ligninsulfonat (Na-Salz) wurde im gleichen Verhältnis bezogen auf die Gesamtfarbstoffmenge eingesetzt wie in Beispiel 1. Die erhaltene Farbstoffmischung (0,1 g) wurde anschließend zum Färben von 10 g Polyesterfasern eingesetzt, wobei klare marineblaue Färbungen mit guten Wasch- und Sublimierechtheiten erhalten wurden.

Analog Beispiel 9 wurden folgende Farbstoffe der Formeln I und II gemäß der Tabelle 2 kombiniert. Dabei wurde das Gewichtsverhältnis von I:II aus Beispiel 9 beibehalten. Es wurden grünstichige bis rotstichige marineblaue Färbungen erhalten.

**Tabelle 2**

| | **Farbstoff der Formel (I)*** | **Farbstoff der Formel (II)** | | | | |
|---|---|---|---|---|---|---|
| **Bsp. Nr** | **R**^{**1**} | **X** | **R**^{**2**} | **R**^{**5**} | **R**^{**3**} | **R**^{**4**} |
| 10 | H | Cl | CH₃ | CH₃ | CH₂-CH₂OCOCH₃ | CH₂CH₂OCOCH₃ |
| 11 | CH₃ | Cl | C₂H₅ | CH₃ | CH₂CH₂OCOCH₃ | CH₂CH₂OCOCH₃ |
| 12 | Cl | Br | C₂H₅ | CH₃ | CH₂CH₂OCOCH₃ | CH₂CH₂OCOCH₃ |
| 13 | H | Cl | CH₃ | CH₃ | C₂H₅ | C₂H₅ |
| 14 | H | Br | CH₃ | CH₃ | C₂H₅ | C₂H₅ |
| 15 | H | Cl | CH₃ | CH₃ | CH₂-CH=CH₂ | CH₂-CH=CH₂ |
| 16 | H | Br | CH₃ | CH₃ | CH₂-CH=CH₂ | CH₂-CH=CH₂ |
| 17 | CH₃ | Br | CH₃ | CH₃ | CH₂-CH=CH₂ | H |
| 18 | CH₃ | Cl | CH₃ | CH₃ | CH₂-CH=CH₂ | H |
| 19 | H | Br | C₂H₅ | CH₃ | C₂H₅ | C₂H₅ |
| 20 | H | Cl | C₂H₅ | CH₃ | C₂H₅ | C₂H₅ |
| 21 | CH₃ | Cl | CH₃ | CH₃ | CH₂CH₂OCOC₂H₅ | CH₂CH₂OCOC₂H₅ |
| 22 | H | Br | CH₃ | CH₃ | CH₂CH₂OCOC₂H₅ | CH₂CH₂OCOC₂H₅ |

| | | | | | | |
|---|---|---|---|---|---|---|
| * (Der Ring A trägt keinen weiteren Substituenten; n = 1) | | | | | | |

### Beispiel 23

24 g des Farbstoffes der Formel (6) aus Beispiel 9 und 7 g des Farbstoffes der Formel (3) aus Beispiel 1 sowie 22 g des Farbstoffes der Formel (5) 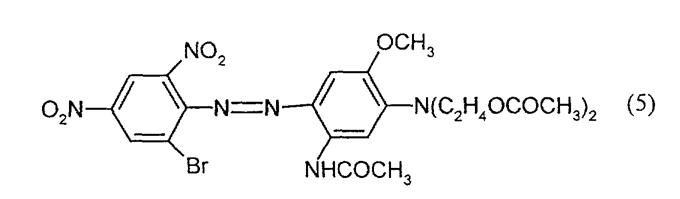 wurden analog Beispiel 1 zusammen mit 300 g Wasser und 53 g Na-Ligninsulfonat gemahlen und getrocknet.

Verwendet man 0,35 g dieser Farbstoffmischung zum Färben von Polyestergewebe analog Beispiel 1b, werden rotstichig blumige Schwarzfärbungen erhalten.

Ersetzte man den Farbstoff (5) aus Beispiel 23 in gleicher Menge gegen einen Farbstoff der Formel (II) gemäß nachstehender Tabelle 3, wurden auf Polyester weitere rotstichige Schwarzfärbungen mit guten Echtheiten erhalten.

**Tabelle 3**

| Substituentenbedeutungen für den Farbstoff der Formel (II) | | | | | |
|---|---|---|---|---|---|
| **Bsp.Nr.** | **X** | **R**² | **R**⁵ | **R**³ | **R**⁴ |
| 24 | Cl | CH₃ | CH₃ | C₂H₄OCOCH₃ | C₂H₄OCOCH₃ |
| 25 | Br | C₂H₅ | CH₃ | C₂H₄OCOCH₃ | C₂H₄OCOCH₃ |
| 26 | Cl | C₂H₅ | CH₃ | C₂H₄OCOCH₃ | C₂H₄OCOCH₃ |
| 27 | Br | CH₃ | C₂H₅ | C₂H₄OCOCH₃ | C₂H₄OCOCH₃ |
| 28 | Cl | CH₃ | C₂H₅ | C₂H₄OCOCH₃ | C₂H₄OCOCH₃ |
| 29 | Br | CH₃ | CH₃ | C₂H₄OCOC₂H₅ | C₂H₄OCOC₂H₅ |
| 30 | Cl | CH₃ | CH₃ | C₂H₄OCOC₂H₅ | C₂H₄OCOC₂H₅ |
| 31 | Cl | CH₃ | CH₃ | C₂H₄COOCH₃ | C₂H₄COOCH₃ |
| 32 | Br | CH₃ | CH₃ | C₂H₄CN | C₂H₄CN |
| 33 | Br | CH₃ | CH₃ | C₂H₄OCH₃ | C₂H₄OCH₃ |
| 34 | Cl | CH₃ | CH₃ | C₂H₄CN | CH₂C₆H₅ |

### Beispiel 35

17,6 g des Farbstoffes der Formel (6) aus Beispiel 9, 9,4 g des Farbstoffes der Formel (2) aus Beispiel 1 und 11,0 g des Farbstoffes (3) aus Beispiel 1, wurden zusammen mit 62 g Na-Ligninsulfonat und 300 g Wasser analog Beispiel 1 gemahlen und getrocknet.

0,6 g des so erhaltenen Pulvers wurden zusammen mit 10 g Polyestergewebe bei pH 8,5 bis 9 mit Hilfe eines Glycin/NaOH-Puffers bei 130°C 60 min gefärbt. Es wird ein tiefschwarz gefärbtes Textilmaterial erhalten.

Ersetzte man den Farbstoff der Formel (2) in Beispiel 35 gegen einen Farbstoff der Formel (II) der nachstehenden Tabelle 4 in gleicher Menge und färbte man mit diesen Mischungen Polyester analog Beispiel 35, so wurden ebenfalls tiefschwarze Färbungen erhalten.

**Tabelle 4**

| Eingesetzte Farbstoffkomponenten der Formel (II) | | | | | |
|---|---|---|---|---|---|
| **Bsp.Nr.** | **X** | **R**² | **R**⁵ | **R**³ | **R**⁴ |
| 36 | Cl | CH₃ | CH₃ | C₂H₅ | C₂H₅ |
| 37 | Br | C₂H₅ | CH₃ | C₂H₅ | C₂H₅ |
| 38 | Cl | C₂H₅ | CH₃ | C₂H₅ | C₂H₅ |
| 39 | Cl | CH₃ | CH₃ | CH₂-CH=CH₂ | CH₂-CH=CH₂ |
| 40 | Br | CH₃ | CH₃ | CH₂-CH=CH₂ | CH₂-CH=CH₂ |
| 41 | Cl | CH₃ | CH₃ | CH₂-CH=CH₂ | H |
| 42 | Br | CH₃ | CH₃ | CH₂-CH=CH₂ | H |
| 43 | Cl | C₂H₅ | CH₃ | CH₂-CH=CH₂ | CH₂-CH=CH₂ |
| 44 | Br | C₂H₅ | CH₃ | CH₂-CH=CH₂ | CH₂-CH=CH₂ |
| 45 | Cl | CH₃ | C₂H₅ | CH₂-CH=CH₂ | CH₂-CH=CH₂ |
| 46 | Br | CH₃ | C₂H₅ | CH₂-CH=CH₂ | CH₂-CH=CH₂ |
| 47 | Cl | CH₃ | C₂H₅ | C₂H₅ | C₂H₅ |
| 48 | Br | CH₃ | C₂H₅ | C₂H₅ | C₂H₅ |

### Beispiel 49 (fällt nicht unter Erfindung)

Analog Beispiel 1 wurde Polyestergewebe mit einer Farbstoffmischung gefärbt, enthaltend
16,7 g des Farbstoffes der Formel (6) aus Beispiel 9,
6,1 g des Farbstoffes der Formel (7) 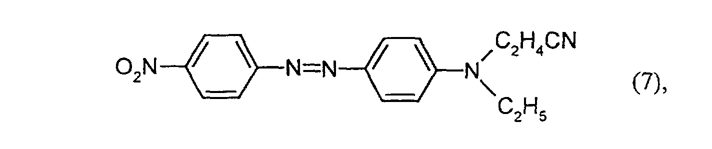
11,9 g des Farbstoffes der Formel (8) 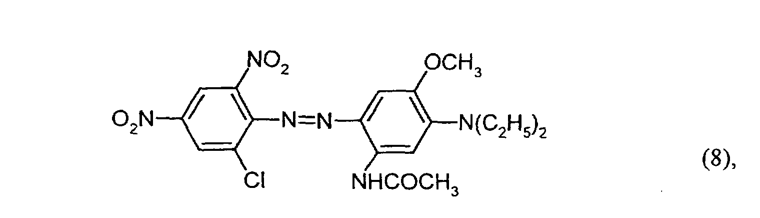 und
15,3 g des Farbstoffes der Formel (9)

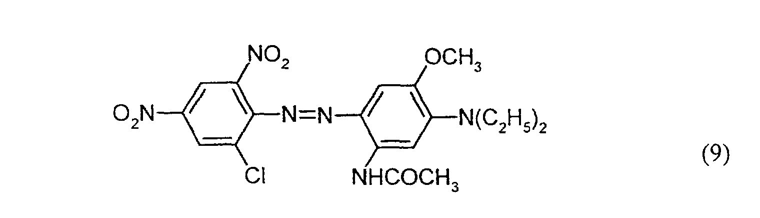

Diese Mischung wurde nach Perlmahlung in Gegenwart von 50 g Na-Ligninsulfonat und 650 g Wasser sprühgetrocknet.

0,1 g dieser Mischung wurden zum Färben von 5 g Polyestergewebe eingesetzt. Es werden schwarze Färbungen erhalten.

### Beispiele 50 bis 54

Analog Beispiel 49 wurde mit den Mischungen der nachfolgenden Tabelle 5 gefärbt. In allen Fällen werden als Ergebnisse gute pH-Abhängigkeit, ausgezeichnete Baderschöpfung und gute Sublimierechtheit erhalten.

**Tabelle 5**

| **Farbstoff I*** | | | **Farbstoff (7)** | **Farbstoff II** | | | | **Farbstoff III** | | | |
|---|---|---|---|---|---|---|---|---|---|---|---|
| **Bsp. Nr.** | **n** | **R**^{**1**} | | **X** | **R**^{**2**} | **R**^{**3**}**=R**^{**4**} | **R**^{**5**} | **X**^{**1**} | **X**^{**2**} | **R**^{**7**}**=R**^{**8**} | **R**^{**6**} |
| 50 | 1 | H | " | Cl | CH₃ | CH₂CH=CH₂ | CH₃ | Cl | NO₂ | C₂H₅ | CH₃ |
| 51 | 1 | H | " | Cl | C₂H₅ | C₂H₅ | C₂H₅ | Cl | NO₂ | C₂H₅ | CH₃ |
| 52 | 1 | H | " | Br | CH₃ | C₂H₅ | CH₃ | Br | NO₂ | C₂H₅ | CH₃ |
| 53 | 1 | H | " | Cl | CH₃ | C₂H₅ | CH₃ | Br | NO₂ | C₂H₅ | CH₃ |
| 54 | 1 | H | " | Br | CH₃ | CH₂CH=CH₂ | CH₃ | Br | NO₂ | C₂H₅ | CH₃ |

| | | | | | | | | | | | |
|---|---|---|---|---|---|---|---|---|---|---|---|
| * Ring A ist nicht weiter substituiert | | | | | | | | | | | |

## Patentansprüche

1. Mischung, enthaltend wenigstens eine Verbindung der Formel (I) 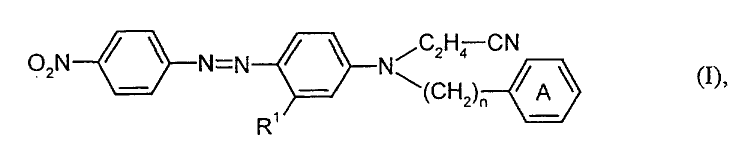 worin
R¹ für Wasserstoff, C₁-C₄-Alkyl, Halogen, insbesondere Cl und Br oder C₁-C₄-Alkoxy steht,
n 1 oder 2 bedeutet und der
Ring A gegebenenfalls substituiert ist,
und wenigstens eine Verbindung der Formel (II) 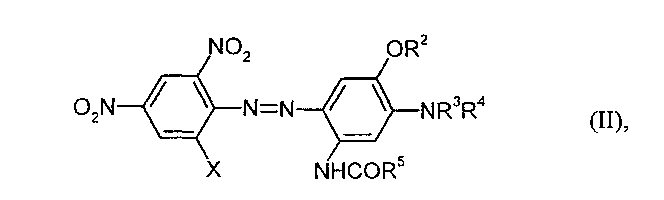 worin
X für Halogen, insbesondere Cl und Br oder CN steht,
R² und R⁵ unabhängig voneinander Wasserstoff oder C₁-C₄-Alkyl bedeuten,
R³ und R⁴ unabhängig voneinander Wasserstoff, gegebenenfalls substituiertes C₁-C₄-Alkyl oder C₂-C₄-Alkenyl bedeuten.

2. Mischung gemäß Anspruch 1, enthaltend wenigstens eine Verbindung der Formel (I), worin der Ring A keine weiteren Substituenten trägt.

3. Mischung gemäß Anspruch 1, enthaltend wenigstens eine Verbindung der Formel (I), worin R¹ für Wasserstoff oder C₁-C₄-Alkyl, insbesondere Methyl steht.

4. Mischung gemäß Anspruch 1, enthaltend wenigstens eine Verbindung der Formel (1), worin n für 1 steht, R¹ Wasserstoff oder Methyl bedeutet und der Ring A nicht weiter substituiert ist.

5. Mischung gemäß Anspruch 1, enthaltend Verbindungen der Formel (II), worin X für Halogen, insbesondere Cl oder Br steht.

6. Mischung gemäß Anspruch 1, enthaltend Verbindungen der Formel (II), worin
R³ und R⁴ unabhängig voneinander Wasserstoff, C₂-C₄-Alkenyl, unsubstituiertes C₁-C₄-Alkyl oder durch -OCOR, -CN und/oder -COOR substituiertes C₁-C₄-Alkyl bedeutet, wobei R für Wasserstoff oder C₁-C₄-Alkyl steht.

7. Mischung gemäß Anspruch 1, **dadurch gekennzeichnet, daß** sie eine Verbindung der Formel (III), (IV) und/oder (V) enthält, 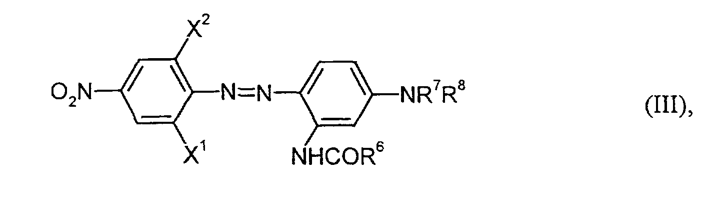 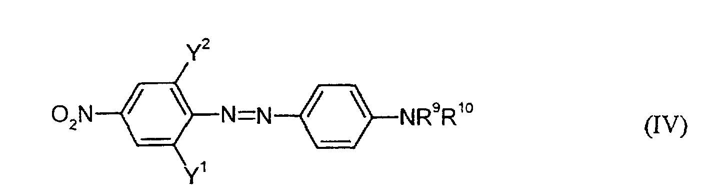 und/oder 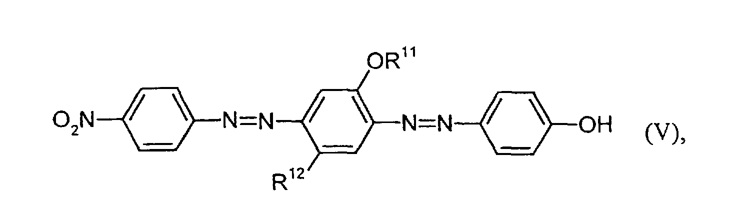 worin
X¹ Halogen, insbesondere Cl und Br oder CN bedeutet,
X² Halogen, insbesondere Cl und Br, Wasserstoff, NO₂ oder CN,
R6 C₁-C₄-Alkyl bedeutet,
R⁷ und R⁸ unabhängig voneinander Wasserstoff, unsubstituiertes oder durch -OH, -CN, -OCOR, -OCOC₆H₅, -OCOO(C₁-C₄-Alkyl), -COOR, -OC₆H₅, -C₆H₅ und/oder C₁-C₄-Alkoxy substituiertes C₁-C₄-Alkyl oder C₂-C₄-Alkenyl bedeuten, wobei R für Wasserstoff oder C₁-C₄-Alkyl steht,
Y¹ und Y² unabhängig voneinander Wasserstoff oder Halogen, insbesondere Cl und Br bedeuten,
R⁹ und R¹⁰ unabhängig voneinander für Wasserstoff, unsubstituiertes oder durch -OH, -CN, -OCOR, -OCOC₆H₅ und/oder C₁-C₄-Alkoxy substituiertes C₁-C₄-Alkyl, wobei R die obengenannte Bedeutung hat, oder C₂-C₄-Alkenyl stehen,
R¹¹ C₁-C₄-Alkyl bedeutet und
R¹² Wasserstoff, C₁-C₄-Alkyl oder C₁-C₄-Alkoxy bedeutet.

8. Mischungen gemäß Anspruch 1, enthaltend 1 bis 99 Gew.-%, insbesondere 1 bis 80 Gew.-%, wenigstens einer Verbindung der Formel (I) und 1 bis 99 Gew.-%, insbesondere 20 bis 99 Gew.-% wenigstens einer Verbindung der Formel (II), bezogen auf die Farbstoffgesamtmenge.

9. Farbstoffpräparation, enthaltend
10 bis 60 Gew.-% Farbstoffmischung gemäß Anspruch 1 und
40 bis 90 Gew.-% Dispergiermittel.

10. Verfahren zur Herstellung der Farbstoffpräparation gemäß Anspruch 9, **dadurch gekennzeichnet, daß** die Einzelfarbstoffe der Farbstoffmischung gemäß Anspruch 1 in Wasser in Gegenwart eines Dispergiermittels gemahlen, anschließend gemischt und gegebenenfalls getrocknet werden oder daß die Farbstoffmischung gemäß Anspruch 1 in Wasser in Gegenwart eines Dispergiermittels gemahlen und gegebenenfalls getrocknet wird.

11. Verwendung der Farbstoffmischungen gemäß Anspruch 1 zum Färben und Bedrucken von hydrophoben synthetischen Materialien oder zum Färben von hydrophoben synthetischen Materialien in der Masse.

12. Mit Farbstoffmischungen gemäß Anspruch 1 gefärbte oder bedruckte, hydrophobe synthetische Materialien.

## Claims

1. Mixture comprising at least one compound of the formula (I) 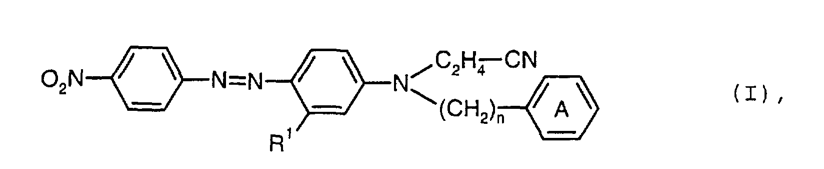 where
R¹ is hydrogen, C₁-C₄-alkyl, halogen, especially Cl and Br, or C₁-C₄-alkoxy,
n is 1 or 2, and the ring A is optionally substituted,
and at least one compound of the formula (II) 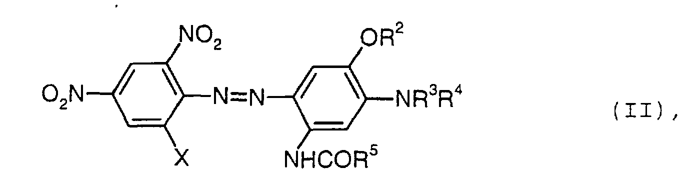 where
X is halogen, especially Cl and Br, or CN,
R² and R⁵ are independently hydrogen or C₁-C₄-alkyl, and
R³ and R⁴ are independently hydrogen, optionally substituted C₁-C₄-alkyl or C₂-C₄-alkenyl.

2. Mixture according to Claim 1, comprising at least one compound of the formula (I) where the ring A does not bear any further substituents.

3. Mixture according to Claim 1, comprising at least one compound of the formula (I) where R¹ is hydrogen or C₁-C₄-alkyl, especially methyl.

4. Mixture according to Claim 1, comprising at least one compound of the formula (I), where n is 1, R¹ is hydrogen or methyl and the ring A is not further substituted.

5. Mixture according to Claim 1, comprising compounds of the formula (II) where X is halogen, especially Cl or Br.

6. Mixture according to Claim 1, comprising compounds of the formula (II) where
R³ and R⁴ are independently hydrogen, C₂-C₄-alkenyl, unsubstituted C₁-C₄-alkyl or ROCO-, NC- and/or ROOC-substituted C₁-C₄-alkyl, R being hydrogen or C₁-C₄-alkyl.

7. Mixture according to Claim 1, **characterized in that** it comprises a compound of the formula (III), (IV) and/or (V) 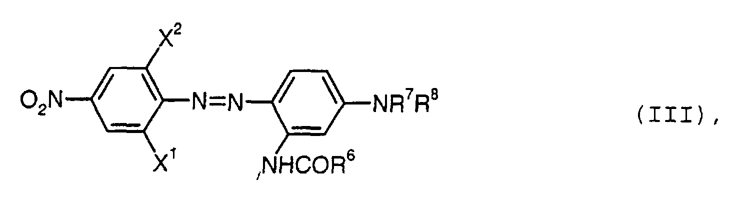 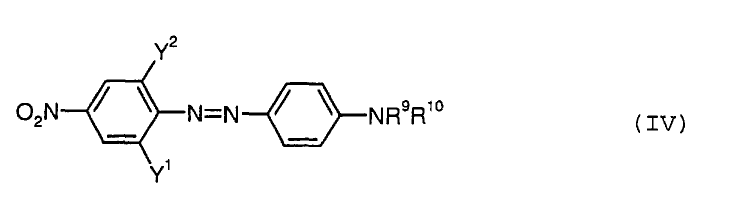 and/or 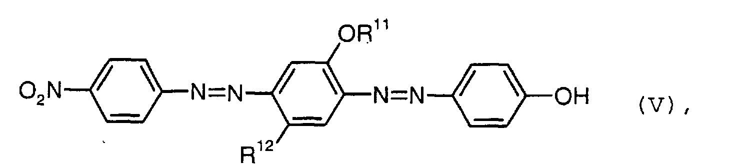 where
X¹ is halogen, especially Cl and Br, or CN,
X² is halogen, especially Cl and Br, hydrogen, NO₂ or CN,
R⁶ is C₁-C₄-alkyl,
R⁷ and R⁸ are independently hydrogen, unsubstituted or HO-, NC-, ROCO-, H₅C₆OCO-, (C₁-C₄-alkyl)OOCO-, ROOC-, H₅C₆O-, H₅C₆- and/or C₁-C₄-alkoxy-substituted C₁-C₄-alkyl and/or C₂-C₄-alkenyl, R being hydrogen or C₁-C₄-alkyl,
Y¹ and Y² are independently hydrogen or halogen, especially Cl and Br,
R⁹ and R¹⁰ are independently hydrogen, unsubstituted or HO-, NC-, ROCO-, H₅C₆OCO- and/or C₁-C₄-alkoxy-substituted C₁-C₄-alkyl, R being as defined above, or C₂-C₄-alkenyl,
R¹¹ is C₁-C₄-alkyl, and
R¹² is hydrogen, C₁-C₄-alkyl or C₁-C₄-alkoxy.

8. Mixtures according to Claim 1, comprising 1 to 99% by weight, especially 1 to 80% by weight, of at least one compound of the formula (I) and 1 to 99% by weight, especially 20 to 99% by weight, of at least one compound of the formula (II), based on total amount of dye.

9. Dye preparation comprising
10 to 60% by weight of dye mixture according to Claim 1, and
40 to 90% by weight of dispersant.

10. Process for producing the dye preparation of Claim 9, **characterized in that** the individual dyes of the dye mixture of Claim 1 are ground in water in the presence of a dispersant, then mixed and optionally dried or **in that** the dye mixture of Claim 1 is ground in water in the presence of a dispersant and optionally dried.

11. Use of the dye mixtures of Claim 1 for dyeing and printing hydrophobic synthetic materials or for mass coloration of hydrophobic synthetic materials.

12. Hydrophobic synthetic materials dyed or printed with dye mixtures according to Claim 1.

## Revendications

1. Mélange contenant au moins un composé de formule (I) 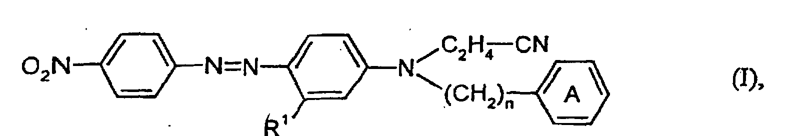 dans laquelle
R¹ représente un atome d'hydrogène ou d'halogène, en particulier Cl ou Br, ou un groupe alkyle en C₁-C₄ ou alcoxy en C₁-C₄,
n représente 1 ou 2, et
le cycle A est éventuellement substitué,
et au moins un composé de formule (II) 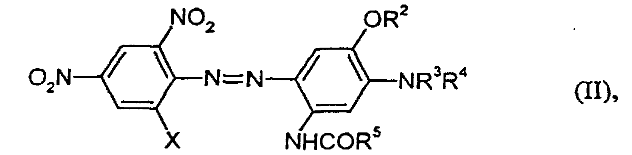 dans laquelle
X représente un atome d'halogène, en particulier Cl et Br, ou CN,
R² et R⁵ représentent, indépendamment l'un de l'autre, un atome d'hydrogène ou un groupe alkyle en C₁-C₄,
R³ et R⁴ représentent, indépendamment l'un de l'autre, un atome d'hydrogène, un groupe alkyle en C₁-C₄ ou alcényle en C₂-C₄ éventuellement substitué.

2. Mélange selon la revendication 1, contenant au moins un composé de formule (I) dans lequel le cycle A ne porte aucun autre substituant.

3. Mélange selon la revendication 1, contenant au moins un composé de formule (I) dans lequel R¹ représente un atome d'hydrogène ou un groupe alkyle en C₁-C₄, en particulier le groupe méthyle.

4. Mélange selon la revendication 1, contenant au moins un composé de formule (I) dans lequel n représente 1, R¹ représente un atome d'hydrogène ou le groupe méthyle et le cycle A n'est pas substitué davantage.

5. Mélange selon la revendication 1, contenant des composés de formule (II) dans lesquels X représente un atome d'halogène, en particulier Cl ou Br.

6. Mélange selon la revendication 1, contenant des composés de formule (II) dans lesquels R³ et R⁴ représentent, indépendamment l'un de l'autre, un atome d'hydrogène, un groupe alcényle en C₂-C₄, un groupe alkyle en C₁-C₄ non substitué ou un groupe alkyle en C₁-C₄ substitué par un groupe -OCOR, -CN et/ou -COOR, R représentant un atome d'hydrogène ou un groupe alkyle en C₁-C₄.

7. Mélange selon la revendication 1, **caractérisé en ce qu'**il contient un composé de formule (III), (IV) et/ou (V), 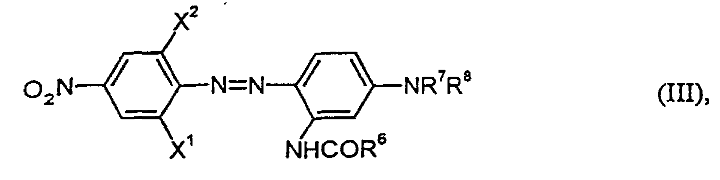 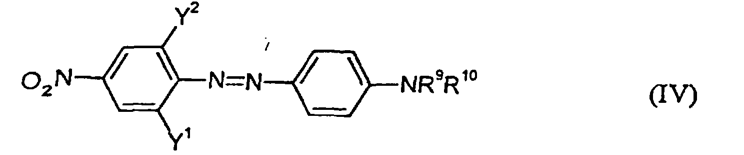 et/ou 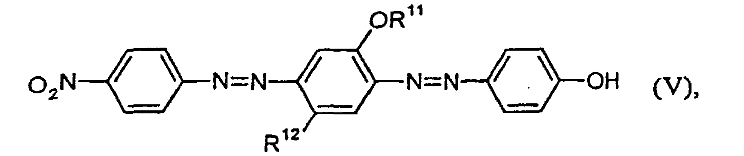 formules dans lesquelles
X¹ représente un atome d'halogène, en particulier Cl ou Br, ou CN,
X² représente un atome d'hydrogène ou d'halogène, en particulier Cl ou Br, NO₂ ou CN,
R⁶ représente un groupe alkyle en C₁-C₄,
R⁷ et R⁸ représentent, indépendamment l'un de l'autre, un atome d'hydrogène, un groupe alkyle en C₁-C₄ ou alcényle en C₂-C₄ non substitué ou substitué par un groupe -OH, -CN, -OCOR, -OCOC₆H₅, -OCOO(alkyle en C₁-C₄), -COOR, -OC₆H₅, -C₆H₅ et/ou alcoxy en C₁-C₄, R représentant un atome d'hydrogène ou un groupe alkyle en C₁-C₄.
Y¹ et Y² représentent, indépendamment l'un de l'autre, un atome d'hydrogène ou d'halogène, en particulier Cl ou Br,
R⁹ et R¹⁰ représentent, indépendamment l'un de l'autre, un atome d'hydrogène, un groupe alkyle en C₁-C₄ non substitué ou substitué par un groupe -OH, -CN, -OCOR, -OCOC₆H₅ et/ou alcoxy en C₁-C₄, R ayant la signification donnée plus haut, ou représentent un groupe alcényle en C₂-C₄,
R¹¹ représente un groupe alkyle en C₁-C₄ et
R¹² représente un atome d'hydrogène ou un groupe alkyle en C₁-C₄ ou alcoxy en C₁-C₄.

8. Mélanges selon la revendication 1, contenant de 1 à 99 % en poids, en particulier de 1 à 80 % en poids, d'au moins un composé de formule (I) et de 1 à 99 % en poids, en particulier de 20 à 99 % en poids, d'au moins un composé de formule (II), par rapport à la quantité totale de colorants.

9. Préparation tinctoriale contenant
de 10 à 60 % en poids d'un mélange de colorants selon la revendication 1,
de 40 à 90 % en poids d'un dispersant.

10. Procédé pour la production de la préparation tinctoriale selon la revendication 9, **caractérisé en ce que** les colorants individuels du mélange de colorants selon la revendication 1 sont broyés dans de l'eau en présence d'un dispersant, puis mélangés et éventuellement séchés, ou **en ce que** le mélange de colorants selon la revendication 1 est broyé dans de l'eau en présence d'un dispersant et éventuellement séché.

11. Utilisation des mélanges de colorants selon la revendication 1, pour la teinture et l'impression de matériaux synthétiques hydrophobes ou pour la teinture de matériaux synthétiques hydrophobes dans la masse.

12. Matériaux synthétiques hydrophobes teints ou imprimés avec des mélanges de colorants selon la revendication 1.
